# FASCICULE DE BREVET EUROPEEN

(11) **EP 1 491 773 B1**
(45) Date de publication et mention de la délivrance du brevet: **08.04.2009**
(21) Numéro de dépôt: 04291595.9
(22) Date de dépôt: 24.06.2004
(51) Int. Cl.: F16B 5/02

(54) **Dispositif de fixation d'un équipement sur une cloison à découplage vibratoire**
Vorrichtung zur vibrationsentkoppelten Befestigung einer Einrichtung an einer Wand
Device for fixing a piece of equipment to a wall in a vibration isolating manner

(30) Priorité: 25.06.2003 FR 0307656
(43) Date de publication de la demande: 29.12.2004
(73) Titulaire: GDF SUEZ, 75008 Paris (FR)
(72) Inventeur: Rouquier, Philippe, 92 250 La Garenne Colombes (FR); Piasco, Jean-Marc, 75013 Paris (FR)
(74) Mandataire: Thévenet, Jean-Bruno

(56) Documents cités:
- DE-A- 19 500 975
- DE-A- 19 613 212
- US-A- 3 809 427
- US-A- 4 921 203

## Description

### Arrière-plan de l'invention

La présente invention se rapporte au domaine général des dispositifs de fixation d'équipements sur une cloison. Elle vise plus particulièrement un dispositif de fixation permettant d'amortir des vibrations qui sont susceptibles d'être générées par l'équipement à fixer.

Dans les logements actuels, les cloisons de distribution ou de doublage sont généralement des plaques de parement en plâtre. Selon l'utilisation de ces cloisons (distribution ou séparation d'appartements, doublage de murs, cloisons verticales ou horizontales), les plaques de parement sont réalisées et montées de différentes manières et présentent des dimensionnements variables.

Il existe différents types de dispositifs permettant de fixer un équipement sur de telles cloisons. Par exemple, pour une fixation sur des cloisons verticales, il est connu d'utiliser des crochets pour accrocher des charges jusqu'à 10 kilos et des chevilles (à expansion, à bascule ou à ressort) pour des charges jusqu'à 30 kilos. Pour les charges supérieures à 30 kilos, la fixation sur des cloisons verticales s'effectue généralement sur des traverses positionnées dans l'âme de la cloison avant la mise en oeuvre de celles-ci. De même, pour fixer des charges jusqu'à 10 kilos sur des cloisons horizontales, on peut utiliser des chevilles (à bascule ou à expansion). Pour des charges supérieures à 10 kilos, l'équipement est souvent directement accroché à la structure du support de l'ossature de la cloison horizontale.

Tous ces différents dispositifs de fixation présentent l'inconvénient principal de ne pas permettre d'amortir les vibrations que peut engendrer l'équipement à fixer sur la cloison. Lorsqu'un équipement fixé à une cloison génère des vibrations (par exemple acoustiques), celles-ci sont transmises à la cloison par l'intermédiaire du dispositif de fixation. Les vibrations acoustiques entraînent alors des nuisances sonores dans les pièces contiguës ou dans les appartements voisins. A titre d'exemples, les chaudières, les chauffe-eau, les radiateurs, les téléviseurs muraux, les enceintes acoustiques, les ventilateurs sont des équipements susceptibles d'engendrer de telles vibrations.

Le phénomène de transmission vibratoire est particulièrement présent dans le cas d'une cloison réalisée à partir d'une plaque de parement de plâtre et d'isolant en polystyrène qui est collée sur une paroi lourde. En effet, un équipement générant des nuisances acoustiques dans les hautes-fréquences peut voir celles-ci s'amplifier en traversant l'isolant en polystyrène, se réfléchir sur la paroi lourde puis rayonner dans la plaque de parement, celle-ci jouant alors le rôle d'une membrane de haut-parleur. Une telle situation se rencontre notamment pour les radiateurs à eau chaude dont la dilatation de la tuyauterie se propage et s'amplifie en traversant la cloison sur laquelle ils sont fixés.

Par ailleurs, il existe une réglementation acoustique relative aux caractéristiques des bâtiments d'habitations qui impose des valeurs acoustiques à respecter. Ainsi, selon cette réglementation, tout appareil de chauffage et de climatisation installé dans les logements d'habitation ne doit pas dépasser un niveau sonore de 35 dB(A) dans les pièces principales et 50 dB(A) dans la cuisine. Cette réglementation acoustique nécessite donc d'utiliser des dispositifs de fixation qui permettent d'éviter que les vibrations acoustiques émises par ces appareils ne se propagent au travers des cloisons sur lesquelles ils sont accrochés.

On connaît par ailleurs par le document de brevet DE 195 00 975 A un dispositif de fixation d'un équipement sur une cloison avec un élément central qui constitue un bloc amortisseur.

### Objet et résumé de l'invention

La présente invention vise donc à pallier un tel inconvénient en proposant un dispositif de fixation d'un équipement sur une cloison qui permet d'amortir convenablement les vibrations engendrées par cet équipement.

A cet effet, il est prévu un dispositif de fixation d'un équipement sur une cloison, comportant: des moyens d'accrochage de l'équipement sur le dispositif de fixation ; un élément avant de guidage formé d'une partie de butée avant et d'une partie creuse faisant saillie vers l'arrière par rapport à la partie de butée avant de façon à venir s'insérer dans une découpe de la cloison ; un élément arrière de serrage formé d'une partie de butée arrière ayant un diamètre extérieur légèrement inférieur au diamètre de la découpe de la cloison et d'une partie faisant saillie vers l'avant par rapport à la partie de butée arrière et conformée de façon à coopérer avec l'intérieur de la partie creuse de l'élément de guidage ; et un élément central de blocage réalisé en matériau déformable, le dispositif de fixation étant caractérisé en ce que la partie de butée avant est destinée à venir en appui contre la cloison, en ce que l'élément central de blocage comporte une partie ayant un diamètre extérieur légèrement inférieur au diamètre de la découpe de la cloison et disposée entre les parties de butée des éléments de guidage et de serrage et une autre partie disposée entre la partie de butée avant de l'élément de guidage et la cloison ; et en ce que le dispositif comporte des moyens de rapprochement de l'élément de serrage contre l'élément de guidage de sorte que, sous l'effet de ces moyens de rapprochement, l'élément central de blocage est comprimé par les parties de butée des éléments de guidage et de serrage contre la cloison pour permettre le blocage du dispositif sur la cloison tout en réalisant un découplage vibratoire entre le dispositif et la cloison.

Le dispositif de fixation est bloqué sur la cloison sur laquelle l'équipement est destiné à être fixé grâce à la compression de l'élément de blocage. Cette compression est obtenue par rapprochement des parties de butée des éléments de guidage et de serrage du dispositif. En outre, comme seul l'élément de blocage est en contact direct avec la cloison, toute vibration, notamment acoustique, engendrée par l'équipement accroché au dispositif est amortie par le matériau déformable de cet élément.

L'élément de blocage peut comporter un manchon en matériau déformable disposé entre les parties de butée des éléments de guidage et de serrage et une rondelle en matériau déformable destinée à être disposée entre la partie de butée avant de l'élément de guidage et la cloison.

Alternativement, l'élément de blocage peut être formé d'un manchon en matériau déformable disposé entre les parties de butée des éléments de guidage et de serrage et qui est muni, à une extrémité avant, d'une collerette en matériau déformable destinée à être disposée entre la partie de butée avant de l'élément de guidage et la cloison.

Dans ces deux configurations, le manchon de l'élément de blocage permet d'obtenir une suspension élastique du dispositif dans la découpe réalisée dans la cloison tout en supprimant le pont vibratoire entre la découpe et l'équipement, et la rondelle ou la collerette permet de supprimer le pont vibratoire entre la face avant de la cloison et l'équipement.

Selon un mode de réalisation de l'invention, l'élément de guidage et l'élément de serrage sont conformés de telle façon que la partie en saillie de l'élément de serrage coulisse à l'intérieur de la partie creuse de l'élément de guidage. Dans ce cas, les moyens de rapprochement et les moyens d'accrochage sont avantageusement confondus et réalisés par une vis qui traverse les éléments de guidage et de serrage et qui est munie d'un écrou de serrage.

Selon un autre mode de réalisation de l'invention, les moyens de rapprochement sont réalisés sous la forme de filetages complémentaires pratiqués sur une paroi interne de la partie creuse de l'élément de guidage et sur une paroi externe de la partie en saillie de l'élément de serrage. Dans ce cas, les moyens d'accrochage comportent une vis traversant la partie de butée de l'élément de guidage et munie d'un écrou de serrage.

De préférence, la partie creuse de l'élément de guidage et la partie en saillie de l'élément de serrage sont tubulaires et les parties de butée des éléments de guidage et de serrage sont sensiblement planes et circulaires.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective et en éclaté d'un dispositif de fixation selon un mode de réalisation de l'invention ;
- les figures 2A et 2B représentent, en coupe longitudinale, deux étapes d'accrochage sur une cloison du dispositif de fixation de la figure 1 ; et
- la figure 3 est une vue en coupe longitudinale d'un dispositif de fixation accroché sur une cloison selon un autre mode de réalisation de l'invention.

### Description détaillée d'un mode de réalisation

De manière générale, le dispositif de fixation selon l'invention est destiné à permettre la fixation sur une cloison de tous types d'équipements, quel que soit le poids de ceux-ci. Il peut par exemple permettre d'accrocher des chaudières murales, des chauffe-eau, des radiateurs, des canalisations, des convecteurs, des téléviseurs, des enceintes acoustiques, des tableaux, des hottes aspirantes de cuisine, des ventilateurs au plafond, etc.

Le dispositif de fixation peut être accroché à tout type de cloison, quels que soient le matériau et le mode de réalisation de celle-ci. Par exemple, la cloison peut être une plaque de parement en plâtre. En outre, le dispositif de fixation peut aussi bien s'adapter aux cloisons verticales qu'aux cloisons horizontales.

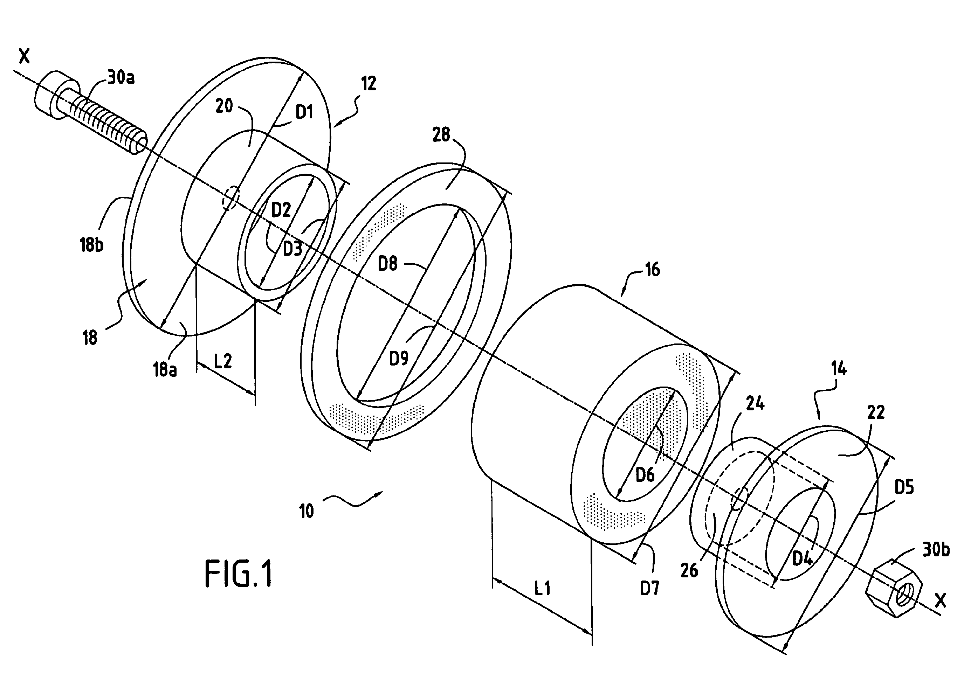

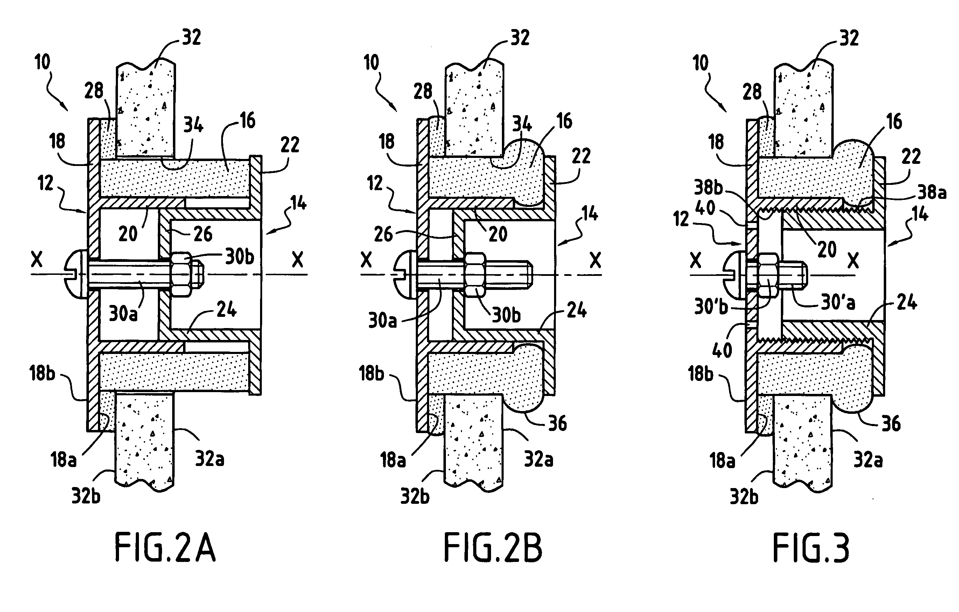

On décrira maintenant l'exemple de réalisation du dispositif de fixation illustré par les figures 1, 2A et 2B.

Sur ces figures, le dispositif de fixation 10 est essentiellement axisymétrique par rapport à un axe longitudinal X-X. Il comporte un élément avant de guidage 12, un élément arrière de serrage 14, un élément central de blocage 16-28, des moyens d'accrochage de l'équipement sur le dispositif et des moyens de rapprochement de l'élément de serrage contre l'élément de guidage.

L'élément de guidage 12 se compose d'une partie de butée avant 18, par exemple plane, qui est destinée à venir en appui contre la cloison sur lequel l'équipement est destiné à être fixé et d'une partie creuse 20 faisant saillie longitudinalement vers l'arrière par rapport à la partie de butée avant 18 de façon à venir se loger à l'intérieur de la cloison.

Plus précisément, la partie de butée 18 de l'élément de guidage 12 présente une forme sensiblement circulaire de diamètre D1 avec une face arrière 18a destinée à venir en appui contre la cloison et une face avant 18b destinée à recevoir l'équipement à fixer sur la cloison.

La partie creuse 20 de l'élément de guidage 12 se présente sous la forme d'une partie tubulaire qui s'étend perpendiculairement et longitudinalement vers l'arrière par rapport à la partie de butée avant 18 et qui est par ailleurs centrée sur la face arrière 18a de cette partie de butée avant 18. Elle possède un diamètre intérieur D2 et un diamètre extérieur D3.

L'élément de serrage 14 est formé d'une partie de butée arrière 22, par exemple plane, et d'une partie 24 faisant saillie longitudinalement vers l'avant par rapport à la partie de butée arrière 22. Cette partie 24 en saillie se présente également sous la forme d'une partie tubulaire qui s'étend selon l'axe longitudinal X-X du dispositif de fixation.

De plus, la partie tubulaire 24 de l'élément de serrage 14 est destinée à coopérer avec l'intérieur de la partie tubulaire 20 de l'élément de guidage 12. Selon le mode de réalisation de l'invention illustré par les figures 1, 2A et 2B, cette coopération s'effectue par coulissement de la partie tubulaire 24 de l'élément de serrage à l'intérieur de la partie tubulaire 20 de l'élément de guidage. Pour ce faire, la partie tubulaire 24 de l'élément de serrage présente un diamètre extérieur D4 qui est légèrement inférieur au diamètre intérieur D2 de la partie tubulaire 20 de l'élément de guidage 12.

Par ailleurs, il est envisageable de prévoir un système de guide, telle qu'une rainure, permettant d'éliminer la rotation de l'élément de serrage 14 par rapport à l'élément de guidage 12 lors du rapprochement de ces deux éléments.

La partie tubulaire 24 de l'élément de serrage 14 est en outre munie, à son extrémité avant d'un fond 26 et, à son extrémité arrière d'une collerette circulaire faisant saillie radialement vers l'extérieur par rapport à la partie tubulaire. Cette collerette circulaire qui forme ainsi la partie de butée arrière 22 de l'élément de serrage 14 possède un diamètre D5 inférieur au diamètre D1 de la partie de butée avant 18 de l'élément de guidage 12.

Le dispositif de fixation selon l'invention comporte en outre un élément central de blocage du dispositif sur la cloison formé notamment d'un manchon 16 en matériau déformable qui est interposé entre la partie de butée avant 18 de l'élément de guidage 12 et la partie de butée arrière 22 de l'élément de serrage 14. Cet élément central est destiné à assurer à la fois le blocage du dispositif de fixation sur la cloison et le découplage vibratoire entre l'équipement à fixer et le dispositif selon des modalités qui seront décrites ultérieurement.

De façon plus précise, le manchon 16 présente une forme de bague qui vient se loger autour de la partie tubulaire 20 de l'élément de guidage 12. A cet effet, le diamètre intérieur D6 du manchon est légèrement supérieur au diamètre extérieur D3 de la partie tubulaire 20 de l'élément de guidage 12. De plus, son diamètre extérieur D7 correspond sensiblement au diamètre D5 de la collerette circulaire 22 formant la partie plane de l'élément de serrage 14. Enfin, le manchon 16 s'étend longitudinalement sur une longueur L1 supérieure à la longueur L2 sur laquelle s'étend la partie tubulaire 20 de l'élément de guidage 12.

Par ailleurs, comme illustré sur les figures 1, 2A et 2B, l'élément central de blocage comporte en outre une rondelle 28, également en matériau déformable, qui est destinée à venir s'interposer entre la partie de butée 18 de l'élément de guidage 12 et la cloison.

Pour ce faire, cette rondelle présente un diamètre intérieur D8 qui est légèrement supérieur au diamètre extérieur D7 du manchon 16 et un diamètre extérieur D9 qui correspond sensiblement au diamètre D1 de la partie de butée 18 de l'élément de guidage 12. La rondelle 28 peut également posséder un diamètre intérieur D8 sensiblement égal au diamètre extérieur D7 du manchon 16. Dans ce cas, lorsque le manchon 16 est sollicité, il prend appui sur la rondelle 28.

Alternativement, on peut aussi imaginer que le manchon 16 de l'élément de blocage présente, à une extrémité avant, une collerette faisant saillie radialement vers l'extérieur de façon à venir s'interposer entre la partie de butée 18 de l'élément de guidage 12 et la cloison. Dans ce cas non représenté sur les figures, la collerette présente un diamètre extérieur correspondant sensiblement au diamètre D1 de la partie de butée 18 de l'élément de guidage 12.

Le manchon 16 et la rondelle 28 de l'élément de blocage du dispositif de fixation sont réalisés en matériau déformable de type élastomère. Par exemple, on pourra utiliser comme élastomères des caoutchoucs naturels, synthétiques ou encore du polychloroprène. La dureté de ces caoutchoucs varie en fonction du poids de l'équipement à fixer sur la cloison et de la nature de celui-ci. A titre d'exemple, leur dureté peut être comprise entre 10 et 70 « Shore A ».

Le dispositif de fixation selon l'invention comporte également des moyens permettent de rapprocher, selon la direction longitudinale, l'élément de serrage 14 contre l'élément de guidage 12.

Dans le mode de réalisation illustré par les figures 1, 2A et 2B, ces moyens de rapprochement sont réalisés par un système de type vis/écrou. Une vis 30a traverse, de l'avant vers l'arrière du dispositif, la partie de butée 18 de l'élément de guidage 12 et le fond 26 de la partie tubulaire 24 de l'élément de serrage 14. Cette vis est munie d'un écrou de serrage 30b.

Afin de faciliter le rapprochement de l'élément de serrage 14 contre l'élément de guidage 12, l'écrou 30b peut être rendu solidaire du fond 26 de la partie tubulaire 24 de l'élément de serrage pour éviter sa rotation lors du vissage de la vis 30a. L'écrou 30b peut par exemple être fixé sur le fond 26 par collage ou soudage. Il peut également être rendu solidaire du fond 26 en pratiquant dans celui-ci une empreinte de forme complémentaire.

De plus, dans ce mode de réalisation, la vis 30a munie de son écrou de serrage 30b permet aussi d'accrocher l'équipement (non représenté sur les figures) au dispositif de fixation.

Sur la figure 2A, le dispositif de fixation 10 ainsi constitué est monté sur une cloison 32, par exemple sur une plaque de parement. A cet effet, une découpe circulaire 34 est réalisée au travers de la cloison à l'aide d'une scie cloche ou d'une scie trépan par exemple.

Le diamètre de la découpe 34 est légèrement supérieur au diamètre extérieur D7 du manchon 16 en matériau déformable afin de permettre le passage du dispositif de fixation 10 au travers de la cloison 32. On notera que pour éviter tout basculement vers l'avant du dispositif de fixation, le diamètre D1 de la partie de butée 18 de l'élément de guidage doit être supérieur au diamètre de la découpe 34 réalisée dans la cloison.

Le dispositif de fixation 10 est inséré dans la découpe 34 de sorte que la face arrière 18a de la partie de butée 18 de l'élément de guidage 12 vient en appui contre la cloison 32 par l'intermédiaire de la rondelle 28 de l'élément de blocage du dispositif.

Par ailleurs, sur la figure 2A, le manchon 16 de l'élément de blocage n'est pas dans un état comprimé mais il est simplement maintenu entre les parties de butée 18, 22 des éléments de guidage 12 et de serrage 14 par l'écrou 30b serré sur la vis 30a.

Par serrage de l'écrou 30b sur la vis 30a (figure 2B), la partie tubulaire 24 de l'élément de serrage 14 coulisse vers l'avant à l'intérieur de la partie tubulaire 20 de l'élément de guidage 12 de sorte que le manchon 16 se comprime entre les parties de butée 18, 22 des éléments de guidage 12 et de serrage 14. Ainsi, la longueur L1 du manchon diminue et son diamètre extérieur D7 augmente. Cette compression du manchon 16 s'effectue essentiellement dans le plan radial, contre la découpe 34 réalisée dans la cloison 32. Le dispositif de fixation étant axisymétrique par rapport à son axe longitudinal X-X, cette compression du manchon 16 est par ailleurs uniforme sur toute la circonférence de la découpe 34.

De la sorte, par rapprochement de l'élément de serrage 14 contre l'élément de guidage 12 sous l'effet de serrage de l'écrou 30b, le manchon 16 se comprime contre la cloison 32 et bloque radialement le dispositif de fixation 10 dans la découpe 34.

Sous l'effort de compression du manchon 16, un bourrelet 36 de matériau déformable se forme entre la partie de butée arrière 22 de l'élément de serrage 14 et la face arrière 32a de la cloison 32. Ce bourrelet permet donc de réaliser un blocage du dispositif à l'arrière de la cloison.

Comme indiqué précédemment, la présence de la partie de butée avant 18 de l'élément de guidage 12 présentant un diamètre D1 supérieur à celui de la découpe 34 et qui est plaquée contre la face avant 32b de la cloison permet également d'obtenir un blocage du dispositif à l'avant de la cloison.

Par conséquent, par rapprochement de l'élément de serrage 14 contre l'élément de guidage 12, le dispositif de fixation 10 est bloqué sur la cloison 32 à la fois par compression radiale du manchon 16 dans la découpe 34, mais aussi par pincement de la cloison 32, entre ses faces avant 32b et arrière 32a. Par l'intermédiaire de ce dispositif, il est alors possible de fixer sur la cloison tous types d'équipements, même lourds.

Par ailleurs, le rapprochement de l'élément de serrage 14 contre l'élément de guidage 12 a également pour effet de comprimer la rondelle 28 de l'élément de blocage entre la face arrière 18a de la partie de butée 18 de l'élément de guidage et la face avant 32b de la cloison 32.

Ainsi, le contact entre la cloison 32 et le dispositif de fixation 10 s'effectue uniquement par l'intermédiaire du manchon 16 et de la rondelle 28 qui sont réalisés en matériau déformable. Toute vibration susceptible d'être transmise de l'équipement à fixer vers la cloison 32 via le dispositif de fixation 10 est donc amortie par le matériau déformable du manchon 16 et de la collerette 28 de l'élément de blocage.

En effet, le manchon 16 réalise une suspension élastique du dispositif de fixation dans le plan radial de la découpe 34 ce qui permet de supprimer le pont vibratoire entre cette découpe et l'équipement accroché au dispositif. De même, la rondelle 28 permet de supprimer le pont vibratoire entre la face avant 32b de la cloison 32 et l'équipement. Enfin, le bourrelet 36 permet de supprimer le pont vibratoire entre la partie de butée 22 de l'élément de serrage 14 et la face arrière 32a de la cloison.

On décrira maintenant le dispositif de fixation 10 représenté sur la figure 3. Par rapport au mode de réalisation illustré par les figures 1, 2A et 2B, le dispositif de fixation représenté sur cette figure diffère essentiellement par les moyens de rapprochement de l'élément de serrage 14 contre l'élément de guidage 12.

En effet, selon ce mode de réalisation de l'invention, les moyens de rapprochement sont réalisés par des filetages complémentaires pratiqués sur les parties tubulaires 20, 24 des éléments de guidage 12 et de serrage 14. Plus précisément, la paroi externe de la partie tubulaire 24 de l'élément de serrage présente un filetage mâle 38a, tandis que la paroi interne de la partie tubulaire 20 de l'élément de guidage présente un filetage femelle 38b complémentaire.

Ainsi, la partie tubulaire 24 de l'élément de serrage est vissée à l'intérieur de la partie tubulaire 20 de l'élément de guidage ce qui permet de rapprocher l'élément de serrage contre l'élément de guidage. Comme décrit précédemment, sous l'effet de ce rapprochement par vissage, le manchon 16 et la rondelle 28 de l'élément de blocage se déforment afin de bloquer le dispositif de fixation sur la cloison tout en amortissant les vibrations que peuvent engendrer l'équipement à fixer.

Par ailleurs, on notera que dans ce mode de réalisation, la vis 30'a munie de son écrou de serrage 30'b traverse uniquement la partie de butée 18 de l'élément de guidage et permet d'accrocher sur le dispositif l'équipement à fixer. Dans ce cas, il n'est donc pas nécessaire que la partie tubulaire 24 de l'élément de serrage présente un fond comme dans le mode de réalisation précédent.

De plus, on pourra prévoir des moyens permettant de faciliter le serrage de l'élément de serrage 14 dans l'élément de guidage 12. Par exemple, deux perçages axiaux 40 diamétralement opposés peuvent être pratiqués au travers de la partie de butée avant 18 de l'élément de guidage 12 afin de permettre le serrage de l'élément de serrage 14 à l'aide d'une clé de serrage adaptée.

De plus, afin de faciliter le rapprochement de l'élément de serrage 14 contre l'élément de guidage 12, la partie de butée arrière 22 de l'élément de serrage 14 peut présenter des irrégularités sur sa surface avant pour éviter sa rotation lors du vissage de l'élément de guidage 12.

On décrira maintenant d'autres variantes de réalisation du dispositif de fixation selon l'invention non représentées sur les figures.

Sur les figures 1, 2A et 2B, les parties en saillie 20, 24 des éléments de guidage 12 et de serrage 14 qui coopèrent entre elles sont tubulaires. Il n'est toutefois pas nécessaire que ces parties soient tubulaires pour coulisser l'une dans l'autre.

En effet, on peut imaginer que ces parties présentent une section droite différente, par exemple polygonale (carrée, hexagonale, etc.), elliptique ou autre. Dans ce cas, il est préférable que le manchon 16 en matériau déformable présente une section droite qui épouse les contours de la partie creuse 20 de l'élément de guidage.

On remarquera également que dans le cas d'une coopération par vissage (mode de réalisation illustré par la figure 3), les parties en saillie 20, 24 des éléments de serrage et de guidage ne peuvent que présenter des sections droites circulaires.

De la même manière, les parties de butée 18, 22 des éléments de guidage 12 et de serrage 14 ne sont pas nécessairement circulaires. Elles peuvent présenter une toute autre forme.

En outre, les dimensions du dispositif de fixation (diamètre, longueur, etc.) peuvent varier en fonction de la charge à supporter. Par exemple, les dimensions du dispositif peuvent facilement être adaptées à une découpe de diamètre variant de 15 mm à 100 mm.

On peut également utiliser différents matériaux pour réaliser les éléments de guidage et de serrage du dispositif de fixation. Par exemple, on pourra utiliser des résines plastiques dont le prix de revient et la mise en forme présentent de nombreux avantages et offrent la possibilité de pouvoir être teintées en fonction de la couleur de la cloison.

Un orifice permettant le passage d'un fil d'alimentation électrique peut être réalisé au travers de la partie de butée de l'élément de guidage, et éventuellement au niveau de l'élément de serrage. Par exemple, cet orifice peut être réalisé au voisinage des orifices de passage de la vis d'accrochage de l'équipement sur le dispositif. Cette variante peut être utile notamment dans le cas de fixation d'enceintes murales, de plafonniers ou de ventilateurs.

Le dispositif de fixation selon l'invention présente de multiples avantages. Notamment, ce dispositif permet d'assurer un découplage vibratoire entre l'équipement à fixer et la cloison sur laquelle il est fixé. Ainsi, toutes vibrations acoustiques transmises par l'équipement au dispositif de fixation ne se transmettent pas à la cloison.

En particulier, le dispositif de fixation selon l'invention permet d'obtenir à la fois une isolation acoustique liée à la matière du manchon et de la rondelle (ou collerette) de l'élément de blocage, et une suspension élastique pour de fortes charges qui est liée à la surface de contact entre le dispositif et la cloison. Cette surface de contact est en relation directe avec le diamètre du dispositif de fixation. Suivant les cas, ce diamètre peut être deux à dix fois supérieur à celui d'un dispositif classique de fixation, ce qui permet de supporter des charges deux à dix fois plus lourdes pour une même pression sur la découpe pratiquée dans la cloison.

Ce dispositif de fixation est par ailleurs universel c'est à dire qu'il peut s'adapter à tous types de cloisons (verticales et horizontales), à tous types de matériels et à tous types d'équipements à fixer. Il est également peu onéreux, facile à mettre en oeuvre et à réaliser. Sa mise en place sur une cloison est aisée puisqu'elle ne nécessite qu'une simple découpe avec une scie cloche ou une scie trépan adaptée. De plus, ce dispositif est entièrement démontable et peut donc être réutilisé sans détérioration de la cloison.

Le manchon en matériau déformable de l'élément de blocage permet au dispositif de fixation de s'adapter au mieux à un état de surface de la découpe qui n'est pas nécessairement d'une parfaite régularité. La partie de butée de l'élément de guidage assure le plaquage de l'élément à fixer du fait de sa face avant et protège la cloison de possibles marquages dus aux éléments fixés.

Il est en outre possible d'envisager de réaliser un dispositif de fixation dont la partie de butée de l'élément de guidage puisse s'adapter aux diamètres conventionnels de rosaces dans le cas de la fixation de tuyauteries ou de canalisations, celles-ci pouvant engendrer d'importantes nuisances acoustiques. Pour la plomberie, les diamètres courants des rosaces utilisées sont de l'ordre de 30 à 40 mm.

## Revendications

1. Dispositif de fixation (10) d'un équipement sur une cloison, comportant:
- des moyens d'accrochage (30a, 30b ; 30'a, 30'b) de l'équipement sur le dispositif de fixation ;
- un élément avant de guidage (12) formé d'une partie de butée avant (18) et d'une partie creuse (20) faisant saillie vers l'arrière par rapport à la partie de butée avant (18) de façon à venir s'insérer dans une découpe (34) de la cloison (32) ;
- un élément arrière de serrage (14) formé d'une partie de butée arrière (22) ayant un diamètre extérieur (D5) légèrement inférieur au diamètre de la découpe (34) de la cloison (32) et d'une partie (24) faisant saillie vers l'avant par rapport à la partie de butée arrière (22) et conformée de façon à coopérer avec l'intérieur de la partie creuse (20) de l'élément de guidage (12) ; et
- un élément central de blocage (16, 28) réalisé en matériau déformable, le dispositif de fixation étant **caractérisé en ce que** la partie de butée avant (18) est destinée à venir en appui contre la cloison (32), **en ce que** l'élément central de blocage (16, 28) comporte une partie (16) ayant un diamètre extérieur (D7) légèrement inférieur au diamètre de la découpe (34) de la cloison (32) et disposée entre les parties de butée (18, 22) des éléments de guidage (12) et de serrage (14) et une autre partie (28) disposée entre la partie de butée avant (18) de l'élément de guidage (12) et la cloison (32), et **en ce que** le dispositif comporte des moyens de rapprochement (30a, 30b ; 38a, 38b) de l'élément de serrage (14) contre l'élément de guidage (12) de sorte que, sous l'effet de ces moyens de rapprochement, l'élément central de blocage (16, 28) est comprimé par les parties de butée (18, 22) des éléments de guidage (12) et de serrage (14) contre la cloison (32) pour permettre le blocage du dispositif sur la cloison tout en réalisant un découplage vibratoire entre le dispositif et la cloison.

2. Dispositif selon la revendication 1, **caractérisé en ce que** l'élément de blocage comporte un manchon (16) en matériau déformable disposé entre les parties de butée (18, 22) des éléments de guidage (12) et de serrage (14) et une rondelle (28) en matériau déformable destinée à être disposée entre la partie de butée avant (18) de l'élément de guidage (12) et la cloison (32).

3. Dispositif selon la revendication 1, **caractérisé en ce que** l'élément de blocage comporte un manchon (16) en matériau déformable disposé entre les parties de butée (18, 22) des éléments de guidage (12) et de serrage (14), ledit manchon étant muni, à une extrémité avant, d'une collerette en matériau déformable destinée à être disposée entre la partie de butée avant (18) de l'élément de guidage (12) et la cloison (32).

4. Dispositif selon l'une quelconque des revendications 1 à 3,
**caractérisé en ce que** l'élément de guidage (12) et l'élément de serrage (14) sont conformés de telle façon que la partie en saillie (24) de l'élément de serrage (14) coulisse à l'intérieur de la partie creuse (20) de l'élément de guidage (12).

5. Dispositif selon la revendication 4, **caractérisé en ce que** lesdits moyens de rapprochement (30a, 30b) et lesdits moyens d'accrochage sont confondus.

6. Dispositif selon la revendication 5, **caractérisé en ce que** lesdits moyens de rapprochement et d'accrochage (30a, 30b) comportent une vis (30a) traversant les éléments de guidage (12) et de serrage (14) et munie d'un écrou de serrage (30b).

7. Dispositif selon l'une quelconque des revendications 1 à 3,
**caractérisé en ce que** lesdits moyens de rapprochement comportent des filetages complémentaires (38a, 38b) pratiqués sur une paroi interne de la partie creuse (20) de l'élément de guidage (12) et sur une paroi externe de la partie en saillie (24) de l'élément de serrage (14).

8. Dispositif selon la revendication 7, **caractérisé en ce que** lesdits moyens d'accrochage comportent une vis (30'a) traversant la partie de butée avant (18) de l'élément de guidage (12) et munie d'un écrou de serrage (30'b).

9. Dispositif selon l'une quelconque des revendications 1 à 8,
**caractérisé en ce que** la partie creuse (20) de l'élément de guidage (12) et la partie en saillie (24) de l'élément de serrage (14) sont tubulaires.

10. Dispositif selon l'une quelconque des revendications 1 à 9,
**caractérisé en ce que** les parties de butée (18, 22) des éléments de guidage (12) et de serrage (14) sont sensiblement circulaires.

11. Dispositif selon l'une quelconque des revendications 1 à 10,
**caractérisé en ce que** la partie de butée avant (18) de l'élément de guidage (12) est sensiblement plane.

12. Dispositif selon l'une quelconque des revendications 1 à 11,
**caractérisé en ce que** la partie de butée arrière (22) de l'élément de serrage (14) est sensiblement plane.

## Claims

1. A device (10) for attaching a piece of equipment on a partition, including:
- means (30a, 30b; 30'a, 30'b) for attaching the piece of equipment on the attachment device;
- a front guiding component (12) formed with a front abutment portion (18) and a hollow portion (20) protruding rearwards relatively to the front abutment portion (18) so that it will be inserted in a cut-out (34) of the partition (32);
- a rear tightening component (14) formed with a rear abutment portion (22) having an outer diameter (D5) slightly less than the diameter of the cut-out (34) of the partition (32) and with a portion (24) protruding forwards relatively to the rear abutment portion (22) and conformed so as to cooperate with the inside of the hollow portion (20) of the guiding component (12); and
- a central blocking component (16, 28) made in a deformable material, the attachment device being **characterized in that** the front abutment portion (18) is intended to bear against the partition (32), **in that** the central blocking component (16, 28) includes a portion (16) having an outer diameter (D7) slightly less than the diameter of the cut-out (34) of the partition (32) and positioned between the abutment portions (18, 22) of the guiding (12) and tightening components (14) and another portion (28) positioned between the front abutment portion (18) of the guiding component (12) and the partition (32), and **in that** the device includes means (30a, 30b; 38a, 38b) for bringing the tightening component (14) against the guiding component (12) so that, under the effect of these closing means, the central blocking component (16, 28) is compressed by the abutment portions (18, 22) of the guiding (12) and tightening components (14) against the partition (32) in order to allow blocking of the device on the partition while achieving vibratory decoupling between the device and the partition.

2. The device according to claim 1, **characterized in that** the blocking component includes a sleeve (16) in a deformable material positioned between the abutment portions (18, 22) of the guiding (12) and tightening components (14) and a washer (28) in a deformable material intended to be positioned between the front abutment portion (18) of the guiding component (12) and the partition (32).

3. The device according to claim 1, **characterized in that** the blocking component includes a sleeve (16) in a deformable material positioned between the abutment portions (18, 22) of the guiding (12) and tightening components (14), said sleeve being provided, at a front end, with a flange in a deformable material intended to be positioned between the front abutment portion (18) of the guiding component (12) and the partition (32).

4. The device according to any of claims 1 to 3, **characterized in that** the guiding component (12) and the tightening component (14) are conformed in such a way that the protruding portion (24) of the tightening component (14) slides inside the hollow portion (20) of the guiding component (12).

5. The device according to claim 4, **characterized in that** said closing means (30a, 30b) and said attachment means coincide.

6. The device according to claim 5, **characterized in that** said closing and attachment means (30a, 30b) include a screw (30a) passing through the guiding (12) and tightening components (14) and provided with a tightening nut (30b).

7. The device according to any of claims 1 to 3, **characterized in that** said closing means include complementary threads (38a, 38b) made on an inner wall of the hollow portion (20) of the guiding component (12) and on an outer wall of the protruding portion (24) of the tightening component (14).

8. The device according to claim 7, **characterized in that** said attachment means include a screw (30'a) passing through the front abutment portion (18) of the guiding component (12) and provided with a tightening nut (30'b).

9. The device according to any of claims 1 to 8, **characterized in that** the hollow portion (20) of the guiding component (12) and the protruding portion (24) of the tightening component (14) are tubular.

10. The device according to any of claims 1 to 9, **characterized in that** the abutment portions (18, 22) of the guiding (12) and tightening (14) components are substantially circular.

11. The device according to any of claims 1 to 10, **characterized in that** the front abutment portion (18) of the guiding component (12) is substantially planar.

12. The device according to any of claims 1 to 11, **characterized in that** the rear abutment portion (22) of the tightening component (14) is substantially planar.

## Patentansprüche

1. Vorrichtung (10) für die Befestigung einer Einrichtung an einer Trennwand, umfassend:
- Mittel (30a, 30b; 30'a, 30'b) zum Befestigen der Einrichtung an der Befestigungsvorrichtung;
- ein vorderes Führungselement (12), das von einem vorderen Anschlagteil (18) und von einem Hohlteil (20) gebildet ist, das bezogen auf das vordere Anschlagteil (18) nach hinten vorspringt, so daß es sich in einen Ausschnitt (34) der Trennwand (32) einfügt;
- ein hinteres Klemmelement (14), das von einem hinteren Anschlagteil (22), dessen Außendurchmesser (D5) geringfügig kleiner ist als der Durchmesser des Ausschnitts (34) der Trennwand (32), sowie von einem Teil (24) gebildet ist, das bezogen auf das hintere Anschlagteil (22) nach vorne vorspringt und derart ausgebildet ist, daß es mit dem Innenraum des Hohlteils (20) des Führungselements (12) zusammenwirkt; und
- ein mittleres Blockierelement (16, 28) aus verformbarem Material, wobei die Befestigungsvorrichtung **dadurch gekennzeichnet ist, daß** das vordere Anschlagteil (18) dazu bestimmt ist, an der Trennwand (32) in Anlage zu kommen, daß das mittlere Blockierelement (16, 28) ein Teil (16) umfaßt, dessen Außendurchmesser (D7) geringfügig kleiner ist als der Durchmesser des Ausschnitts (34) der Trennwand (32) und das zwischen den Anschlagteilen (18, 22) des Führungselements (12) und des Klemmelements (14) angeordnet ist, sowie ein weiteres Teil (28) aufweist, das zwischen dem vorderen Anschlagteil (18) des Führungselements (12) und der Trennwand (32) angeordnet ist, und daß die Vorrichtung Mittel (30a, 30b; 38a, 38b) zum Annähern des Klemmelements (14) an das Führungselement (12) aufweist, so daß das mittlere Blockierelement (16, 28) - unter der Wirkung dieser Annäherungsmittel - durch die Anschlagteile (18, 22) des Führungselements (12) und des Klemmelements (14) gegen die Trennwand (32) gedrückt wird, um das Festlegen der Vorrichtung an der Trennwand zu ermöglichen und um gleichzeitig eine Schwingungsentkopplung zwischen der Vorrichtung und der Trennwand zu vollziehen.

2. Vorrichtung nach Anspruch 1, **dadurch gekennzeichnet, daß** das Blockierelement eine Hülse (16) aus verformbarem Material aufweist, die zwischen den Anschlagteilen (18, 22) des Führungselements (12) und des Klemmelements (14) angeordnet ist, sowie eine Scheibe (28) aus verformbarem Material, die dazu bestimmt ist, zwischen dem vorderen Anschlagteil (18) des Führungselements (12) und der Trennwand (32) angeordnet zu werden.

3. Vorrichtung nach Anspruch 1, **dadurch gekennzeichnet, daß** das Blockierelement eine Hülse (16) aus verformbaren Material aufweist, die zwischen den Anschlagteilen (18, 22) des Führungselements (12) und des Klemmelements (14) angeordnet ist, wobei die Hülse an einem vorderen Ende mit einem Kragen aus verformbaren Material versehen ist, welcher dazu bestimmt ist, zwischen dem vorderen Anschlagteil (18) des Führungselements (12) und der Trennwand (32) angeordnet zu werden.

4. Vorrichtung nach einem der Ansprüche 1 bis 3, **dadurch gekennzeichnet, daß** das Führungselement (12) und das Klemmelement (14) derart ausgebildet sind, daß das vorspringende Teil (24) des Klemmelements (14) innerhalb des Hohlteils (20) des Führungselements (12) gleitet.

5. Vorrichtung nach Anspruch 4, **dadurch gekennzeichnet, daß** die Annäherungsmittel (30a, 30b) und die Befestigungsmittel verschmolzen sind.

6. Vorrichtung nach Anspruch 5, **dadurch gekennzeichnet, daß** die Annäherungs-und Befestigungsmittel (30a, 30b) eine Schraube (30a) aufweisen, die das Führungselement (12) und das Klemmelement (14) durchgreift und die mit einer Spannmutter (30b) versehen ist.

7. Vorrichtung nach einem der Ansprüche 1 bis 3, **dadurch gekennzeichnet, daß** die Annäherungsmittel ergänzende Gewinde (38a, 38b) aufweisen, die an einer Innenwand des Hohlteils (20) des Führungselements (12) sowie an einer Außenwand des vorspringenden Teils (24) des Klemmelements (14) ausgebildet sind.

8. Vorrichtung nach Anspruch 7, **dadurch gekennzeichnet, daß** die Befestigungsmittel eine Schraube (30'a) aufweisen, die das vordere Anschlagteil (18) des Führungselements (12) durchgreift und mit einer Spannmutter (30'b) versehen ist.

9. Vorrichtung nach einem der Ansprüche 1 bis 8, **dadurch gekennzeichnet, daß** das Hohlteil (20) des Führungselements (12) und das vorspringende Teil (24) des Klemmelements (14) röhrenförmig sind.

10. Vorrichtung nach einem der Ansprüche 1 bis 9, **dadurch gekennzeichnet, daß** die Anschlagteile (18, 22) des Führungselements (12) und des Klemmelements (14) im wesentlichen kreisförmig sind.

11. Vorrichtung nach einem der Ansprüche 1 bis 10, **dadurch gekennzeichnet, daß** das vordere Anschlagteil (18) des Führungselements (12) im wesentlichen flach ist.

12. Vorrichtung nach einem der Ansprüche 1 bis 11, **dadurch gekennzeichnet, daß** das hintere Anschlagteil (22) des Klemmelements (14) im wesentlichen flach ist.
